# EUROPÄISCHE PATENTSCHRIFT

(11) **EP 3 577 588 B1**
(45) Veröffentlichungstag und Bekanntmachung des Hinweises auf die Patenterteilung: **01.09.2021**
(21) Anmeldenummer: 17835809.9
(22) Anmeldetag: 13.12.2017
(51) Int. Cl.: G06F 21/14, H04L 9/00

(54) **VERFAHREN ZUR RECHNERGESTÜTZTEN OBFUSKATION VON PROGRAMMCODE**
METHOD FOR THE COMPUTER-AIDED OBFUSCATION OF PROGRAM CODE
PROCÉDÉ D'OFFUSCATION ASSISTÉE PAR ORDINATEUR D'UN CODE DE PROGRAMME

(30) Priorität: 10.03.2017 DE 102017204020
(43) Veröffentlichungstag der Anmeldung: 11.12.2019
(73) Patentinhaber: Siemens Aktiengesellschaft, 80333 München (DE)
(72) Erfinder: ZWANZGER, Johannes, 85579 Neubiberg (DE)
(86) Internationale Anmeldenummer: PCT/EP2017/082508
(87) Internationale Veröffentlichungsnummer: WO 2018/162107

(56) Entgegenhaltungen:
- EP-A1- 0 900 488
- EP-A1- 2 937 803
- US-A1- 2014 101 458

## Beschreibung

Die Erfindung betrifft ein Verfahren zur rechnergestützten Obfuskation von Programmcode sowie ein Verfahren zur Ausführung eines solchen obfuszierten Programmcodes. Darüber hinaus umfasst die Erfindung ein technisches System, ein Computerprogrammprodukt und ein Computerprogramm.

Oftmals besteht das Bedürfnis, Informationen aus einem Programmcode gegen unbefugten Zugriff durch Dritte zu schützen. Ein gängiger Ansatz besteht dabei darin, die Informationen mit einer geeigneten Verschlüsselungsfunktion zu verschlüsseln oder den Programmcode mittels eines Code-Packers zu verpacken. Dabei ist es nachteilhaft, dass zur Laufzeit des Programmcodes die Informationen wieder entschlüsselt bzw. der Code wieder entpackt wird, so dass die schützenswerten Informationen bei der Programmausführung komplett im Klartext im Programmspeicher vorliegen und somit die Gefahr besteht, dass ein Angreifer diese Informationen mit geeigneten Techniken aus dem Speicher ausliest.

Aufgabe der Erfindung ist es, ein rechnergeschütztes Verfahren zu schaffen, mit dem schützenswerte Informationen in einem Programmcode sehr gut gegen unbefugten Zugriff durch Dritte zur Laufzeit des Programmcodes geschützt werden.

Diese Aufgabe wird durch die unabhängigen Ansprüche gelöst. Weiterbildungen der Erfindung sind in den abhängigen Ansprüchen definiert.

Das erfindungsgemäße Verfahren dient zur rechnergestützten Obfuskation (d.h. Verschleierung) von Programmcode. In dem zu verschleiernden bzw. obfuszierenden Programmcode ist eine Vielzahl von Rechenschritten implementiert, wobei vorbestimmte Rechenschritte der Vielzahl von Rechenschritten bei Ausführung des Programmcodes in einer vorbestimmten Reihenfolge aufgerufen werden. Der Begriff des Rechenschritts sowie auch des weiter unten genannten Aktualisierungsschritts ist dabei weit zu verstehen. Ein Rechenschritt muss nicht zwangsläufig nur eine einzelne Rechenoperation enthalten, sondern er kann sich aus einer Vielzahl von Rechenoperationen, ggf. mit Bedingungen, Schleifen, Schachtelungen und dergleichen, zusammensetzen. Durch einen Rechenschritt bzw. Aktualisierungsschritt kann somit eine Abfolge von Operationen gekapselt sein.

Die vorbestimmten Rechenschritte des zu verschleiernden Programmcodes enthalten vorgegebene Rechenschritte. Die vorbestimmten Rechenschritte können zum Beispiel nur die vorgegebenen Rechenschritte umfassen, jedoch können neben den vorgegebenen Rechenschritten ggf. auch weitere Rechenschritte vorgesehen sein. Die vorgegebenen Rechenschritte zeichnen sich dadurch aus, dass in diesen Schritten jeweils auf eine im Programmcode hinterlegte erste Tabelle aus einer Vielzahl von digitalen ersten Tabellenwerten zugegriffen wird, um einen für den jeweiligen vorgegebenen Rechenschritt benötigten ersten Tabellenwert aus der ersten Tabelle auszulesen. Für alle vorbestimmten Rechenschritte, welche keine vorgegebenen Rechenschritte sind (sofern vorhanden), ist zwar weiterhin eine vorbestimmte Reihenfolge ihres Aufrufs festgelegt, jedoch greifen diese Rechenschritte nicht auf die erste Tabelle zu.

Der Begriff der Tabelle ist weit zu verstehen. Eine Tabelle stellt eine Menge von digitalen Werten dar, auf welche gezielt durch den Programmcode mit entsprechenden Befehlen zugegriffen werden kann. Ferner ist auch der Begriff des Tabellenwerts weit zu verstehen. Insbesondere kann sich ein Tabellenwert aus mehreren Teilwerten zusammensetzen, welche an unterschiedlichen Stellen im entsprechend aufgerufenen Rechenschritt verarbeitet werden.

Im Rahmen der erfindungsgemäßen Obfuskation des Programmcodes wird eine dynamische Maske umfassend eine Vielzahl von digitalen Maskenwerten erzeugt, wobei sich die Maskenwerte zumindest eines Teils der Maske und vorzugsweise alle Maskenwerte der Maske gegenseitig unterscheiden und ein jeweiliger Maskenwert für einen jeweiligen vorgegebenen Rechenschritt gültig ist.

Im Rahmen des erfindungsgemäßen Verfahrens wird jeder erste Tabellenwert der ersten Tabelle mittels des Maskenwerts, der beim Einlesen des jeweiligen ersten Tabellenwerts im jeweiligen vorgegebenen Rechenschritt gültig ist, in einen digitalen zweiten Tabellenwert gewandelt, wodurch eine zweite Tabelle aus zweiten Tabellenwerten erhalten wird, die anstatt der ersten Tabelle in dem Programmcode hinterlegt wird. Mit anderen Worten wird bei der Ausführung des obfuszierten Programmcodes nicht mehr auf die ersten Tabellenwerte, sondern auf die entsprechenden zweiten Tabellenwerte zugegriffen. Der Maskenwert, der beim Einlesen des jeweiligen ersten Tabellenwerts im jeweiligen vorgegebenen Rechenschritt gültig ist, wird im Folgenden als auch der aktuell gültige Maskenwert bezeichnet.

Damit der obfuszierte Programmcode die gleichen Ergebnisse wie der nicht-obfuszierte Programmcode liefert, wird im Rahmen der Obfuskation ferner für jeden vorgegebenen Rechenschritt ein zusätzlicher Rechenschritt im Programmcode implementiert, welcher einen ausgelesenen zweiten Tabellenwert bei Ausführung des entsprechenden vorgegebenen Rechenschritts in denjenigen ersten Tabellenwert rückrechnet, der für den jeweiligen vorgegebenen Rechenschritt benötigt wird.

Das erfindungsgemäße Verfahren weist den Vorteil auf, dass mittels einer dynamischen Maske schützenswerte Informationen, die tabellarisch hinterlegt sind, sehr gut verschleiert werden. Die Operationen der Demaskierung bzw. Entschleierung werden dabei auf eine Vielzahl von Rechenschritten im gesamten Programmcode verteilt. Somit wird eine Rekonstruktion der verschleierten Informationen während der Laufzeit des obfuszierten Programmcodes stark erschwert.

In einer besonders bevorzugten Ausführungsform werden zur Erzeugung der dynamischen Maske ein initialer Maskenwert und Aktualisierungsschritte festgelegt, wobei durch Anwenden eines oder mehrerer aufeinander folgender Aktualisierungsschritte auf einen aktuell gültigen Maskenwert der für den nächsten vorgegebenen Rechenschritt gültige Maskenwert berechnet wird. Der initiale Maskenwert und die Aktualisierungsschritte werden auch im Programmcode implementiert, so dass im jeweiligen vorgegebenen Rechenschritt der aktuell gültige Maskenwert vorliegt, wobei der zusätzliche Rechenschritt im jeweiligen vorgegebenen Rechenschritt von dem aktuell gültigen Maskenwert abhängt. Durch die Implementierung der Aktualisierungsschritte im Programmcode benötigt ein Angreifer zur Rekonstruktion eines ersten Tabellenwerts in einem vorgegebenen Rechenschritt das Wissen über den initialen Maskenwert und die vorhergehenden Aktualisierungsschritte. Da dieses Wissen im Programmcode verteilt ist, wird ein besonders guter Schutz der Informationen im Programmcode erreicht.

Um eine Rückrechnung der ursprünglichen ersten Tabellenwerte zu erschweren, sind in einer bevorzugten Variante der soeben beschriebenen Ausführungsform die Aktualisierungsschritte für zumindest einen Teil der Maskenwerte und insbesondere für alle Maskenwerte, auf welche sie angewendet werden, unterschiedlich festgelegt. In einer weiteren bevorzugten Variante ist ein Aktualisierungsschritt in jedem der vorgegebenen Rechenschritte vorgesehen, wobei vorzugsweise ferner auch in zumindest einem Teil der vorbestimmten Rechenschritte (insbesondere in allen vorbestimmten Rechenschritten), welche keine vorgegebenen Rechenschritte sind (sofern vorhanden), jeweils ein Aktualisierungsschritt vorgesehen ist.

In einer weiteren bevorzugten Variante werden der initiale Maskenwert und die Aktualisierungsschritte mittels eines Zufallszahlengenerators festgelegt. Auf diese Weise wird eine sehr willkürliche Festlegung dieser Werte bzw. Schritte erreicht und somit die Verschleierung des Programmcodes weiter verbessert.

In einer weiteren bevorzugten Ausführungsform stellen die ersten Tabellenwerte und die zweiten Tabellenwerte sowie auch die Maskenwerte jeweils eine Bitfolge dar. Vorzugsweise erfolgt dabei das Wandeln eines jeweiligen ersten Tabellenwerts in einen zweiten Tabellenwert durch Anwenden von logischen Operationen zwischen der Bitfolge des ersten Tabellenwerts und der Bitfolge des aktuell gültigen Maskenwerts. Das Anwenden der logischen Operationen liefert dabei den zweiten Tabellenwert.

Vorzugsweise werden die obigen logischen Operationen bitweise auf einander korrespondierende Bit der Bitfolgen des jeweiligen ersten Tabellenwerts und des aktuell gültigen Maskenwerts angewendet, wobei die logischen Operationen vorzugsweise eine oder mehrere OR- und/oder XOR- und/oder NOR- und/oder XNOR- und/oder AND- und/oder NAND-Operationen umfassen. Im Falle, dass die Bitfolge des aktuell gültigen Maskenwerts länger als die Bitfolge des ersten Tabellenwerts ist, werden somit nicht alle Bits des aktuell gültigen Maskenwerts zur Modifikation des ersten Tabellenwerts herangezogen.

Im Falle, dass die Bitfolge des aktuell gültigen Maskenwerts kürzer als die Bitfolge des jeweiligen ersten Tabellenwerts ist, wird in einer bevorzugten Variante des erfindungsgemäßen Verfahrens die ursprüngliche Bitfolge des aktuell gültigen Maskenwerts durch mehrfache Verwendung der Bits der ursprünglichen Bitfolge verlängert, so dass für jedes Bit der Bitfolge des jeweiligen ersten Tabellenwerts ein korrespondierendes Bit der Bitfolge des aktuell gültigen Maskenwerts existiert. Das Verlängern der Bitfolge erfolgt vorzugsweise derart, dass die ursprüngliche Bitfolge ein oder mehrfach wiederholt wird. Auf diese Weise wird eine gute Verschleierung des entsprechenden (ersten) Tabellenwerts auch dann erreicht, wenn die Bitlänge des Maskenwerts kürzer als diejenige des entsprechenden Tabellenwerts ist.

Neben dem Verfahren zur Obfuskation von Programmcode betrifft die Erfindung auch ein Verfahren zur Ausführung des obfuszierten Programmcodes. Dabei wird bei Aufruf eines jeweiligen vorgegebenen Rechenschritts des (obfuszierten) Programmcodes der zweite Tabellenwert aus der zweiten Tabelle ausgelesen und für den jeweiligen vorgegebenen Rechenschritt der zusätzliche Rechenschritt ausgeführt, welcher den ausgelesenen zweiten Tabellenwert in denjenigen ersten Tabellenwert rückrechnet, der für den jeweiligen vorgegebenen Rechenschritt benötigt wird.

Im Falle, dass der obfuszierte Programmcode mit einer Ausführungsform erzeugt wurde, welche Aktualisierungsschritte zur Bestimmung des aktuell gültigen Maskenwerts verwendet, werden im Rahmen der Ausführung des obfuszierten Programmcodes auch die im obfuszierten Programmcode implementierten Aktualisierungsschritte ausgeführt.

Die Erfindung betrifft darüber hinaus ein technisches System, welches ein Rechnermittel umfasst, das zur Ausführung des obfuszierten Programmcodes gemäß dem soeben beschriebenen Verfahren eingerichtet ist. Der Begriff des technischen Systems ist dabei weit zu verstehen, und es kann sich hierbei auch um ein einzelnes technisches Gerät handeln. Der obfuszierte Programmcode kann dabei in verschiedenen technischen Systemen hinterlegt sein. Das technische System kann z.B. eine Automatisierungsanlage oder eine Komponente einer Automatisierungsanlage oder ein elektrisches Energieerzeugungs- und/oder Energieverteilsystem oder eine Komponente eines Energieerzeugungs- und/oder Energieverteilsystems oder ein medizinisches Gerät sein.

Darüber hinaus betrifft die Erfindung ein Computerprogrammprodukt mit auf einem maschinenlesbaren Träger gespeicherten Programmcodeabschnitten zur Durchführung des erfindungsgemäßen Verfahrens zur rechnergestützten Obfuskation von Programmcode bzw. zur Durchführung des erfindungsgemäßen Verfahrens zur Ausführung des obfuszierten Programmcodes bzw. zur Durchführung bevorzugter Varianten dieser Verfahren, wenn die Programmcodeabschnitte auf einen Computer ausgeführt werden.

Darüber hinaus betrifft die Erfindung ein Computerprogramm, mit Programmcodeabschnitten zur Durchführung des erfindungsgemäßen Verfahrens zur rechnergestützten Obfuskation von Programmcode bzw. zur Durchführung des erfindungsgemäßen Verfahrens zur Ausführung des obfuszierten Programmcodes bzw. bevorzugter Varianten dieser Verfahren, wenn die Programmcodeabschnitte auf einem Computer ausgeführt werden.

Im Falle, dass das obige Computerprogrammprodukt bzw. Computerprogramm zur Ausführung eines Verfahrens zur Obfuskation von Programmcode dient, wird die Obfuskation mit den entsprechenden Programmcodeabschnitten bewirkt. Die Programmcodeabschnitte stellen somit nicht den zu obfuszierenden Programmcode dar.

Im Falle, dass das Computerprogrammprodukt bzw. das Computerprogramm zur Ausführung des obfuszierten Programmcodes dient, entsprechen die Programmcodeabschnitte dem obfuszierten Programmcode.

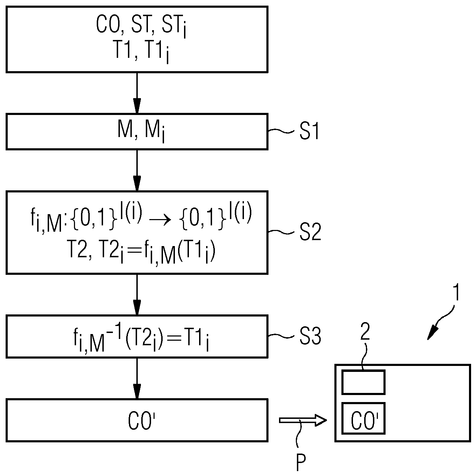

Ein Ausführungsbeispiel der Erfindung wird nachfolgend anhand der beigefügten Fig. 1 detailliert beschrieben. Diese Figur zeigt ein Ablaufdiagramm einer Ausführungsform des erfindungsgemäßen Verfahrens zur Obfuskation von Programmcode.

Gemäß Fig. 1 ist Ausgangspunkt des Verfahrens ein Programmcode CO, der im Rahmen der Erfindung zu verschleiern ist. Dieser Programmcode erhält eine Vielzahl von Rechenschritten, welche in Fig. 1 mit ST bezeichnet sind. Ein Teil dieser Rechenschritte STᵢ (i = 1, ..., n) greift dabei auf eine erste Tabelle T1 zu, wobei der jeweilige Rechenschritt den entsprechenden Eintrag T1ᵢ aus der Tabelle ausliest. Über den Index i wird die vorbestimmte Reihenfolge festgelegt, in der die Rechenschritte STᵢ nacheinander ausgeführt werden. Die Rechenschritte STᵢ entsprechen dabei vorgegebenen Rechenschritten im Sinne von Anspruch 1. Zwischen den Rechenschritten STᵢ können auch noch weitere Rechenschritte des Programmcodes CO ausgeführt werden, wobei diese weiteren Rechenschritte jedoch nicht auf die Tabelle T1 zugreifen.

Gemäß dem Programmcode CO wird somit nur in den Rechenschritten STᵢ auf einen bestimmten Eintrag T1ᵢ der ersten Tabelle T1 zugegriffen. Der jeweilige Tabelleneintrag stellt dabei eine Bitfolge dar, die in dem entsprechenden Rechenschritt verarbeitet wird. Die Bitfolgen der einzelnen Tabelleneinträge haben dabei die Länge l(i). Diese Längen können für unterschiedliche Tabelleneinträge verschieden groß sein.

Der Programmcode CO erzeugt zur Laufzeit aus einem bekannten Input durch Anwendung der Rechenschritte ST einen bestimmten Output. Grundsätzlich können die Rechenschritte ST dabei in beliebiger Reihenfolge durchlaufen werden, jedoch werden die speziellen Rechenschritte STᵢ untereinander immer in der gleichen Reihenfolge und unabhängig vom Input stets genau einmal durchlaufen. Ein jeweiliger Rechenschritt STᵢ greift immer nur auf einen einzelnen Tabelleneintrag T1ᵢ zu, wobei der Rechenschritt jedoch beliebig oft auf diesen Tabelleneintrag bei seiner Ausführung zugreifen darf.

Die nicht verschleierte Tabelle T1 mit den entsprechenden Tabelleneinträgen T1ᵢ enthält schützenswerte Informationen und es ist das Ziel der nachfolgend beschriebenen Ausführungsform, den Programmcode CO derart zu obfuszieren, dass ein unbefugter Dritte die Tabelleneinträge nicht oder nur mit sehr großem Aufwand aus dem Programmcode rekonstruieren kann. Im Gegensatz zu einer einmaligen Anwendung einer Verschlüsselungsfunktion auf die gesamte Tabelle T1 erfolgt die Verschleierung über den gesamten Programmcode verteilt, wodurch die Rückrechnung der ursprünglichen Tabellenwerte stark erschwert wird.

Gemäß Schritt S1 der Fig. 1 wird zur Obfuskation des Programmcodes CO zunächst eine dynamische Maske M mit Maskeneinträgen Mᵢ (i = 1, ..., n) bestimmt. Es existiert somit für jeden vorgegebenen Rechenschritt STᵢ ein entsprechender Maskenwert Mᵢ. Dieser Maskenwert Mᵢ ist nur für den Rechenschritt STᵢ gültig. Durch die Indizierung der Maskenwerte wird eine der Ausführung der Rechenschritte STᵢ entsprechende Reihenfolge festgelegt. Die einzelnen Maskenwerte Mᵢ stellen jeweils eine Bitfolge mit einer bestimmten Länge dar, wobei diese Länge in der hier beschriebenen Ausführungsform über die Maskenwerte Mᵢ gleich bleibt, was jedoch nicht zwangsläufig der Fall sein muss.

Die einzelnen Maskenwerte Mᵢ werden über eine Folge von Aktualisierungsschritten bestimmt, welche aufeinander folgend ausgehend von einem willkürlichen initialen Maskenwert auf den zuletzt aktualisierten Maskenwert angewendet werden. Der Begriff des Aktualisierungsschritts ist dabei weit zu verstehen. Im Besonderen kann ein Aktualisierungsschritt nicht nur eine einzelne Operation, sondern ggf. auch mehrere Operationen enthalten. In der hier beschriebenen Ausführungsform wurden die Aktualisierungsschritte willkürlich festgelegt und sind somit untereinander zumindest teilweise unterschiedlich. Nichtsdestotrotz sind die einzelnen Aktualisierungsschritte fest vorgegeben und die darin enthaltenen Operationen werden in einer festen Reihenfolge ausgeführt. Gemäß dem Schritt S1 wird somit eine Maske M mit willkürlichen Maskenbelegungen bzw. Maskenwerten Mᵢ generiert. Vorzugsweise wird dabei ein Zufallszahlengenerator zur Festlegung des Initialwerts der Maske sowie zur Festlegung der Aktualisierungsschritte verwendet.

In einem Schritt S2 wird dann der im jeweiligen Rechenschritt STᵢ ausgelesene Tabelleneintrag T1ᵢ mittels einer Funktion f_{i,M} verändert, welche von dem Maskenwert Mᵢ abhängt, der im entsprechenden Rechenschritt STᵢ gültig ist. Die Funktion f_{i,M} kann dabei beliebig festgelegt sein, entscheidend ist lediglich, dass die Funktion von dem jeweiligen Maskenwert Mᵢ abhängt und einen Tabelleneintrag T1ᵢ auf einen neuen Tabelleneintrag T2ᵢ einer zweiten Tabelle T2 bijektiv abbildet. Wie aus Fig. 1 ersichtlich, ist die Funktion f_{i,M} in diesem Ausführungsbeispiel eine Abbildung, welche die Bitfolge eines Tabelleneintrags T1ᵢ auf eine andere Bitfolge mit gleicher Länge abbildet, wobei diese andere Bitfolge dem neuen Tabelleneintrag T2ᵢ entspricht.

Nachdem für alle Rechenschritte STᵢ modifizierte Tabelleneinträge T2ᵢ erzeugt wurden, werden die ursprünglichen Tabelleneinträge T1ᵢ durch diese neuen Tabelleneinträge T2ᵢ ersetzt, so dass für einen Angreifer die ursprünglichen Tabelleneinträge nicht ohne weiteres aus dem Programmcode CO ausgelesen werden können. Aufgrund der Modifikation der Tabelleneinträge muss der Programmcode CO auch noch dahingehend geändert werden, dass im entsprechenden Rechenschritt STᵢ der ausgelesene Tabelleneintrag T2ᵢ in den ursprünglichen Tabelleneintrag T1ᵢ umgerechnet wird. Dies wird gemäß Fig. 1 im Schritt S3 erreicht. In diesem Schritt wird der initiale Maskenwert am Anfang des Programmcodes hinterlegt und die obigen Aktualisierungsschritte werden auch im Programmcode implementiert, wobei in der hier beschriebenen Ausführungsform bei Aufruf eines jeweiligen Rechenschritts STᵢ ein entsprechender Aktualisierungsschritt zur Bestimmung des aktuell gültigen Maskenwerts durchgeführt wird. Darüber hinaus wird in jedem Rechenschritt ein Zusatzschritt implementiert, der den ausgelesenen Tabelleneintrag T2ᵢ mittels der inversen Funktion f_{i,M}⁻¹, die von dem aktuell gültigen Maskenwert Mᵢ abhängt, in den ursprünglichen Tabelleneintrag T1ᵢ umrechnet.

Als Ergebnis der Schritte S1 bis S3 erhält man somit einen obfuszierten Programmcode CO', in dem die ursprüngliche Tabelle T1 verschleiert ist. Durch einen Rückrechnungsschritt auf die ursprünglichen Tabellenwerte wird jedoch das gleiche Rechenergebnis wie mit dem nicht-obfuszierten Programmcode CO erreicht. Der obfuszierte Programmcode CO' kann anschließend in einem beliebigen technischen Gerät hinterlegt werden und zur Ausführung gebracht werden. Dies ist in Fig. 1 durch den Pfeil P angedeutet. Dabei wird der obfuszierte Programmcode CO' auf dem technischen Gerät 1 gespeichert, welches über ein Rechnermittel 2 verfügt, mit dem der obfuszierte Programmcode CO' zur Ausführung gebracht wird.

Die im Vorangegangenen beschriebene Obfuskation eines Programmcodes kann in verschiedenen technischen Gebieten eingesetzt werden. Im Besonderen kann dabei Programmcode in SCADA-Systemen, PLCs (PLC = Programmable Logic Controller), Motion-Control-Systemen, Automatisierungssoftware, Computertomographiegeräten, SmartGrids usw. verändert werden. Es können dabei beliebige Algorithmen obfusziert werden, z.B. Programme auf PCs (PC = Personal Computer) oder Firmware auf Geräten. Die Programme können beliebige Aufgaben übernehmen, z.B. kann es sich um Steuerungs- und/oder Regelungsalgorithmen oder um Algorithmen basierend auf neuronalen Netzen handeln.

Allgemein wird mit der erfindungsgemäßen Obfuskation erreicht, dass tabellarisch gespeicherte und schützenswerte Daten in einer Software verschleiert werden. Bei den schützenswerten Daten kann es sich z.B. um kryptographische Informationen oder um Informationen handeln, die von Bedeutung für Lizenzprüfungen sind.

Die im Vorangegangenen beschriebene Ausführungsform des erfindungsgemäßen Verfahrens weist eine Reihe von Vorteilen auf. Insbesondere kann ein Angreifer aufgrund der Maskierung einer Tabelle keinerlei Information mehr aus dieser Tabelle extrahieren. Um die maskierte Form der Tabelle sinnvoll interpretieren zu können, ist vielmehr die zusätzliche Kenntnis über den Initialisierungswert der Maske und der gesamten Folge der Aktualisierungsschritte für die Maske notwendig.

Im Gegensatz zu einmaligen Entschlüsselungs- bzw. Entpackungsoperationen finden die Schritte der Demaskierung der Tabelle nicht an einer punktuellen Stelle im Programmcode statt, sondern die Demaskierung ist über den gesamten Programmcode verteilt. Ein Angreifer muss somit den gesamten Programmcode analysieren, um Rückschlüsse auf die ursprünglichen Werte der Tabelle zu bekommen. Im Gegensatz hierzu kann ein Angreifer im Falle einer einmaligen Verschlüsselung einer Tabelle bei Kenntnis über die Entschlüsselung unmittelbar auf den Klartext der Tabelleneinträge zugreifen.

Bei der erfindungsgemäßen Obfuskation kann ferner zu keinem Zeitpunkt der Ausführung des Programmcodes anhand des Speicherzustands, d.h. insbesondere des aktuellen Maskenwerts, ohne weiteres auf mehr als den im aktuellen Schritt verwendeten Tabelleneintrag geschlossen werden. Bereits bei der nächsten Aktualisierung des Maskenwerts ist der Rückschluss auf den früheren Tabelleneintrag nicht mehr möglich.

Das erfindungsgemäße Obfuskationsverfahren kann ferner sehr gut mit weiteren Techniken des Reverse Engineering, wie z.B. Anti-Debug-Maßnahmen oder die Verwendung selbstmodifizierender Codes, kombiniert werden. Auf diese Weise wird es für einen Angreifer nochmals schwerer, die gesamte Abfolge von Demaskierungsoperationen zur Extraktion der ursprünglichen Tabellenwerte zu rekonstruieren.

## Patentansprüche

1. Verfahren zur rechnergestützten Obfuskation von Programmcode (CO), wobei in dem Programmcode (CO) eine Vielzahl von Rechenschritten (ST) implementiert ist, wobei vorbestimmte Rechenschritte der Vielzahl von Rechenschritten (ST) bei Ausführung des Programmcodes (CO) in einer vorbestimmten Reihenfolge aufgerufen werden und zumindest manche der vorbestimmten Rechenschritte vorgegebene Rechenschritte (STᵢ) sind, in denen jeweils auf eine im Programmcode (CO) hinterlegte erste Tabelle (T1) aus einer Vielzahl von digitalen ersten Tabellenwerten (T1ᵢ) zugegriffen wird, um einen für den jeweiligen vorgegebenen Rechenschritt (STᵢ) benötigten ersten Tabellenwert (T1ᵢ) aus der ersten Tabelle (T1) auszulesen, wobei zur Veränderung des Programmcodes die folgenden Schritte ausgeführt werden:
- es wird eine dynamische Maske (M) umfassend eine Vielzahl von digitalen Maskenwerten (Mᵢ) erzeugt, wobei sich die Maskenwerte (Mᵢ) zumindest eines Teils der Maske (M) gegenseitig unterscheiden und ein jeweiliger Maskenwert (Mᵢ) für einen jeweiligen vorgegebenen Rechenschritt (STᵢ) gültig ist;
- jeder erste Tabellenwert (T1ᵢ) der ersten Tabelle (T1) wird mittels des Maskenwerts (Mᵢ), der beim Einlesen des jeweiligen ersten Tabellenwerts (T1ᵢ) im jeweiligen vorgegebenen Rechenschritt (STᵢ) gültig ist, in einen digitalen zweiten Tabellenwert (T2ᵢ) gewandelt, wodurch eine zweite Tabelle (T2) aus zweiten Tabellenwerten (T2ᵢ) erhalten wird, die anstatt der ersten Tabelle (T1) in dem Programmcode (CO) hinterlegt wird;
- für jeden vorgegebenen Rechenschritt (STᵢ) wird ein zusätzlicher Rechenschritt (f_{i,M}⁻¹) im Programmcode (CO) implementiert, welcher einen ausgelesenen zweiten Tabellenwert (T2ᵢ) in denjenigen ersten Tabellenwert (T1ᵢ) rückrechnet, der für den jeweiligen vorgegebenen Rechenschritt (STᵢ) benötigt wird
**dadurch gekennzeichnet, dass** zur Erzeugung der dynamischen Maske (M) ein initialer Maskenwert und Aktualisierungsschritte festgelegt werden, wobei durch Anwenden eines oder mehrerer aufeinander folgender Aktualisierungsschritte auf einen aktuell gültigen Maskenwert (Mᵢ) der für den nächsten vorgegebenen Rechenschritt (STᵢ) gültige Maskenwert (Mᵢ) berechnet wird, wobei die Aktualisierungsschritte auch im Programmcode (CO) implementiert werden, so dass im jeweiligen vorgegebenen Rechenschritt (STᵢ) der aktuell gültige Maskenwert (Mᵢ) vorliegt, wobei der zusätzliche Rechenschritt (f_{i,M}⁻¹) im jeweiligen vorgegebenen Rechenschritt von dem aktuell gültigen Maskenwert (Mᵢ) abhängt, wobei die Aktualisierungsschritte für zumindest einen Teil der Maskenwerte (Mᵢ), auf welche sie angewendet werden, unterschiedlich festgelegt sind.

2. Verfahren nach Anspruch 1, **dadurch gekennzeichnet, dass** ein Aktualisierungsschritt in jedem der vorgegebenen Rechenschritte (STᵢ) implementiert wird, wobei vorzugsweise ferner auch in zumindest einem Teil der vorbestimmten Rechenschritte, welche keine vorgegebenen Rechenschritte (STᵢ) sind, jeweils ein Aktualisierungsschritt implementiert wird.

3. Verfahren nach einem der vorhergehenden Ansprüche, **dadurch gekennzeichnet, dass** der initiale Maskenwert (Mᵢ) und/oder die Aktualisierungsschritte mittels eines Zufallszahlengenerators festgelegt werden.

4. Verfahren nach einem der vorhergehenden Ansprüche, **dadurch gekennzeichnet, dass** die ersten Tabellenwerte (T1ᵢ) und die zweiten Tabellenwerte (T2ᵢ) sowie die Maskenwerte (Mᵢ) jeweils eine Bitfolge darstellen.

5. Verfahren nach Anspruch 4, **dadurch gekennzeichnet, dass** das Wandeln eines jeweiligen ersten Tabellenwerts (T1ᵢ) in einen zweiten Tabellenwert (T2ᵢ) durch Anwenden von logischen Operationen zwischen der Bitfolge des jeweiligen ersten Tabellenwerts (T1ᵢ) und der Bitfolge des aktuell gültigen Maskenwerts (Mᵢ) durchgeführt wird, wobei das Anwenden der logischen Operationen den zweiten Tabellenwert (T2ᵢ) liefert.

6. Verfahren nach Anspruch 5, **dadurch gekennzeichnet, dass** die logischen Operationen bitweise auf einander korrespondierende Bits der Bitfolgen des jeweiligen ersten Tabellenwerts (T1ᵢ) und des aktuell gültigen Maskenwerts (Mi) angewendet werden, wobei die logischen Operationen vorzugsweise eine oder mehrere OR- und/oder XOR- und/oder NOR- und/oder XNOR- und/oder AND- und/oder NAND-Operationen umfassen.

7. Verfahren nach Anspruch 6, **dadurch gekennzeichnet, dass** im Falle, dass die Bitfolge des aktuell gültigen Maskenwerts (Mᵢ) kürzer als die Bitfolge des jeweiligen ersten Tabellenwerts (T1ᵢ) ist, die ursprüngliche Bitfolge des aktuell gültigen Maskenwerts (Mᵢ) durch mehrfache Verwendung der Bits der ursprünglichen Bitfolge, insbesondere durch ein oder mehrfaches Wiederholen der ursprünglichen Bitfolge, verlängert wird, so dass für jedes Bit der Bitfolge des jeweiligen ersten Tabellenwerts (T1ᵢ) ein korrespondierendes Bit der Bitfolge des aktuell gültigen Maskenwerts (Mᵢ) existiert.

8. Verfahren zur Ausführung eines Programmcodes (CO'), der mit einem Verfahren nach einem der vorhergehenden Ansprüche obfusziert ist, wobei bei Aufruf eines jeweiligen vorgegebenen Rechenschritts (STᵢ) des Programmcodes (CO') der zweite Tabellenwert (T2ᵢ) aus der zweiten Tabelle (T2ᵢ) ausgelesen wird und für den jeweiligen vorgegebenen Rechenschritt (STᵢ) der zusätzliche Rechenschritt (f_{i,M}⁻¹) ausgeführt wird, welcher den ausgelesenen zweiten Tabellenwert (T2ᵢ) in denjenigen ersten Tabellenwert (T1ᵢ) rückrechnet, der für den jeweiligen vorgegebenen Rechenschritt (STᵢ) benötigt wird.

9. Technisches System, **dadurch gekennzeichnet, dass** das technische System (1) ein Rechnermittel (2) umfasst, welches zur Ausführung eines Programmcodes (CO') gemäß dem Verfahren nach Anspruch 8 eingerichtet ist.

10. Technisches System nach Anspruch 9, **dadurch gekennzeichnet, dass** das technische System (1) eine Automatisierungsanlage oder eine Komponente einer Automatisierungsanlage oder ein elektrisches Energieerzeugungs- und/oder Energieverteilsystem oder eine Komponente eines elektrischen Energieerzeugungs- und/oder Energieverteilsystems oder ein medizinisches Gerät ist.

11. Computerprogrammprodukt mit auf einem maschinenlesbaren Träger gespeicherten Programmcodeabschnitten zur Durchführung eines Verfahrens nach einem der Ansprüche 1 bis 8, wenn die Programmcodeabschnitte auf einem Computer ausgeführt werden.

12. Computerprogramm mit Programmcodeabschnitten zur Durchführung eines Verfahrens nach einem der Ansprüche 1 bis 8, wenn die Programmcodeabschnitte auf einem Computer ausgeführt werden.

## Claims

1. Method for computer-aided obfuscation of program code (CO), wherein a multiplicity of computing steps (ST) are implemented in the program code (CO), wherein predetermined computing steps of the multiplicity of computing steps (ST) are called in a predetermined order when the program code (CO) is executed, and at least some of the predetermined computing steps are prescribed computing steps (STᵢ), in each of which a first table (T1) saved in the program code (CO) and comprising a multiplicity of digital first table values (T1ᵢ) is accessed in order to read from the first table (T1) a first table value (T1ᵢ) needed for the respective prescribed computing step (STᵢ), wherein the following steps are carried out to alter the program code:
- a dynamic mask (M) comprising a multiplicity of digital mask values (Mᵢ) is generated, wherein the mask values (Mᵢ) of at least part of the mask (M) differ from one another and a respective mask value (Mᵢ) is valid for a respective prescribed computing step (STᵢ);
- each first table value (T1ᵢ) of the first table (T1) is converted into a digital second table value (T2ᵢ) by means of the mask value (Mᵢ) that is valid in the respective prescribed computing step (STᵢ) when the respective first table value (T1ᵢ) is read in, as a result of which a second table (T2) comprising second table values (T2ᵢ) is obtained that is saved in the program code (CO) instead of the first table (T1);
- an additional computing step (f_{i,M}⁻¹) is implemented in the program code (CO) for each prescribed computing step (STᵢ), which additional computing step converts a read second table value (T2ᵢ) back into that first table value (T1ᵢ) that is needed for the respective prescribed computing step (STᵢ),
**characterized in that** an initial mask value and update steps are stipulated to generate the dynamic mask (M), wherein the mask value (Mᵢ) that is valid for the next prescribed computing step (STᵢ) is calculated by applying one or more successive update steps to a currently valid mask value (Mᵢ), wherein the update steps are also implemented in the program code (CO), so that the currently valid mask value (Mᵢ) is present in the respective prescribed computing step (STᵢ), wherein the additional computing step (f_{i,M}⁻¹) in the respective prescribed computing step is dependent on the currently valid mask value (Mᵢ), wherein the update steps for at least some of the mask values (Mᵢ) to which they are applied are stipulated differently.

2. Method according to Claim 1, **characterized in that** an update step is implemented in each of the prescribed computing steps (STᵢ), wherein preferably an update step is further also implemented in each of at least some of the predetermined computing steps that are not prescribed computing steps (STᵢ).

3. Method according to either of the preceding claims, **characterized in that** the initial mask value (Mᵢ) and/or the update steps are stipulated by means of a random number generator.

4. Method according to one of the preceding claims, **characterized in that** the first table values (T1ᵢ) and the second table values (T2ᵢ) and also the mask values (Mᵢ) each represent a bit sequence.

5. Method according to Claim 4, **characterized in that** the conversion of a respective first table value (T1ᵢ) into a second table value (T2ᵢ) is performed by applying logic operations between the bit sequence of the respective first table value (T1ᵢ) and the bit sequence of the currently valid mask value (Mᵢ), wherein the application of the logic operations delivers the second table value (T2ᵢ).

6. Method according to Claim 5, **characterized in that** the logic operations are applied bit by bit to mutually corresponding bits of the bit sequences of the respective first table value (T1ᵢ) and of the currently valid mask value (Mᵢ), wherein the logic operations preferably comprise one or more OR and/or XOR and/or NOR and/or XNOR and/or AND and/or NAND operations.

7. Method according to Claim 6, **characterized in that** in the event of the bit sequence of the currently valid mask value (Mᵢ) being shorter than the bit sequence of the respective first table value (T1ᵢ), the original bit sequence of the currently valid mask value (Mᵢ) is lengthened by repeated use of the bits of the original bit sequence, in particular by repeating the original bit sequence one or more times, so that a corresponding bit of the bit sequence of the currently valid mask value (Mᵢ) exists for each bit of the bit sequence of the respective first table value (T1ᵢ).

8. Method for executing a program code (CO') obfuscated by means of a method according to one of the preceding claims, wherein calling a respective prescribed computing step (STᵢ) of the program code (CO') results in the second table value (T2ᵢ) being read from the second table (T2ᵢ) and the additional computing step (f_{i,M}⁻¹) being carried out for the respective prescribed computing step (STᵢ), which additional computing step converts the read second table value (T2ᵢ) back into that first table value (T1ᵢ) that is needed for the respective prescribed computing step (STᵢ).

9. Technical system, **characterized in that** the technical system (1) comprises a computer means (2) configured to execute a program code (CO') in accordance with the method according to Claim 8.

10. Technical system according to Claim 9, **characterized in that** the technical system (1) is an automation installation or a component of an automation installation or an electrical power generation and/or power distribution system or a component of an electrical power generation and/or power distribution system or a medical appliance.

11. Computer program product having program code sections, stored on a machine-readable carrier, for performing a method according to one of Claims 1 to 8 when the program code sections are executed on a computer.

12. Computer program having program code sections for performing a method according to one of Claims 1 to 8 when the program code sections are executed on a computer.

## Revendications

1. Procédé d'obfuscation de code de programme (CO) assistée par ordinateur, une pluralité d'étapes de calcul (ST) étant implémentée dans le code de programme (CO), des étapes de calcul prédéfinies de la pluralité d'étapes de calcul (ST) étant appelées lors de l'exécution du code de programme (CO) dans un ordre prédéfini et au moins certaines des étapes de calcul prédéfinies étant des étapes de calcul données (STᵢ) dans lesquelles il est accédé respectivement à un premier tableau (T1) déposé dans le code de programme (CO) et obtenu à partir d'une pluralité de premières valeurs de tableau numériques (T1ᵢ) pour extraire du premier tableau (T1) une première valeur de tableau (T1ᵢ) requise pour l'étape de calcul respective donnée (STᵢ), les étapes suivantes étant exécutées pour modifier le code de programme :
- un masque dynamique (M) comprenant une pluralité de valeurs de masque numériques (Mᵢ) est créé, les valeurs de masque (Mᵢ) d'au moins une partie du masque (M) se différenciant réciproquement et une valeur de masque respective (Mᵢ) étant valable pour une étape de calcul respective donnée (STᵢ) ;
- chaque première valeur de tableau (T1ᵢ) du premier tableau (T1) est transformée au moyen de la valeur de masque (Mᵢ), valable lors de la lecture de la première valeur de tableau respective (T1ᵢ) à l'étape de calcul respective donnée (STᵢ), en une deuxième valeur de tableau numérique (T2ᵢ), ce par quoi on obtient un deuxième tableau (T2) à partir de deuxièmes valeurs de tableau (T2ᵢ), lequel est déposé dans le code de programme (CO) au lieu du premier tableau (T1) ;
- pour chaque étape de calcul données (STᵢ) est implémentée une étape de calcul supplémentaire (f_{i,M}⁻¹) dans le code de programme (CO), laquelle recalcule une deuxième valeur de tableau extraite (T2ᵢ) pour retomber sur la première valeur de tableau (T1ᵢ) requise pour l'étape de calcul respective donnée (STᵢ), **caractérisé en ce qu'**une valeur de masque initiale et des étapes d'actualisation sont fixées pour générer le masque dynamique (M), la valeur de masque (Mᵢ) valable pour l'étape de calcul suivante donnée (STᵢ) étant calculée par application d'une ou de plusieurs étapes d'actualisation successives à une valeur de masque actuellement valable (Mᵢ), les étapes d'actualisation étant également implémentées dans le code de programme (CO), de sorte qu'on a la valeur de masque actuellement valable (Mᵢ) à l'étape de calcul respective donnée (STᵢ), l'étape de calcul supplémentaire (f_{i,M}⁻¹) dépendant, à l'étape de calcul respective donnée, de la valeur de masque actuellement valable (Mᵢ), les étapes d'actualisation étant fixées différemment pour au moins une partie des valeurs de masque (Mᵢ) auxquelles elles sont appliquées.

2. Procédé selon la revendication 1, **caractérisé en ce qu'**une étape d'actualisation est implémentée dans chacune des étapes de calcul données (STᵢ), respectivement une étape d'actualisation étant en outre, préférentiellement implémentée également dans au moins une partie des étapes de calcul prédéfinies qui ne sont pas des étapes de calcul données (STᵢ).

3. Procédé selon l'une des revendications précédentes, **caractérisé en ce que** la valeur de masque initiale (Mᵢ) et/ou les étapes d'actualisation sont fixées au moyen d'un générateur de nombres aléatoires.

4. Procédé selon l'une des revendications précédentes, **caractérisé en ce que** les premières valeurs de tableau (T1ᵢ) et les deuxièmes valeurs de tableau (T2ᵢ) ainsi que les valeurs de masque (Mᵢ) représentent respectivement une séquence de bits.

5. Procédé selon la revendication 4, **caractérisé en ce que** la transformation d'une première valeur de tableau respective (T1ᵢ) en une deuxième valeur de tableau (T2ᵢ) est effectuée par application d'opérations logiques entre la séquence de bits de la première valeur de tableau respective (T1ᵢ) et la séquence de bits de la valeur de masque actuellement valable (Mᵢ), l'application des opérations logiques fournissant la deuxième valeur de tableau (T2ᵢ).

6. Procédé selon la revendication 5, **caractérisé en ce que** les opérations logiques sont appliquées bit par bit à des bits correspondants entre eux des séquences de bits de la première valeur de tableau respective (T1ᵢ) et de la valeur de masque actuellement valable (Mᵢ), les opérations logiques comprenant préférentiellement une ou plusieurs opérations OR et/ou XOR et/ou NOR et/ou XNOR et/ou AND et/ou NAND.

7. Procédé selon la revendication 6, **caractérisé en ce que**, si la séquence de bits de la valeur de masque actuellement valable (Mᵢ) est plus courte que la séquence de bits de la première valeur de tableau respective (T1ᵢ), la séquence de bits d'origine de la valeur de masque actuellement valable (Mᵢ) est prolongée par utilisation multiple des bits de la séquence de bits d'origine, et plus particulièrement par une ou plusieurs répétitions de la séquence de bits d'origine, de sorte qu'il existe, pour chaque bit de la séquence de bits de la première valeur de tableau respective (T1ᵢ) un bit correspondant de la séquence de bits de la valeur de masque actuellement valable (Mᵢ).

8. Procédé d'exécution d'un code de programme (CO') qui est obfusqué avec un procédé selon l'une des revendications précédentes, à l'appel d'une étape de calcul respective donnée (STᵢ) du code de programme (CO'), la deuxième valeur de tableau (T2ᵢ) étant extraite du deuxième tableau (T2ᵢ) et l'étape de calcul supplémentaire (f_{i,M}⁻¹) étant exécutée pour l'étape de calcul respective donnée (STᵢ), laquelle étape de calcul supplémentaire recalcule la deuxième valeur de tableau extraite (T2ᵢ) pour retomber sur la première valeur de tableau (T1ᵢ) qui est requise pour l'étape de calcul respective donnée (STᵢ).

9. Système technique, **caractérisé en ce que** le système technique (1) comprend un moyen informatique (2) qui est configuré pour exécuter un code de programme (CO') selon le procédé selon la revendication 8.

10. Système technique selon la revendication 9, **caractérisé en ce que** le système technique (1) est une installation d'automatisation ou un composant d'une installation d'automatisation ou un système électrique de production d'énergie et/ou de distribution d'énergie ou un composant d'un système électrique de production d'énergie et/ou de distribution d'énergie ou un appareil médical.

11. Produit de programme informatique avec des sections de code de programme sauvegardées sur un support lisible par machine pour exécuter un procédé selon l'une des revendications 1 à 8 lorsque les sections de code de programme sont exécutées sur un ordinateur.

12. Programme informatique avec des sections de code de programme pour exécuter un procédé selon l'une des revendications 1 à 8 lorsque les sections de code de programme sont exécutées sur un ordinateur.
